# EUROPEAN PATENT SPECIFICATION

(11) **EP 3 382 774 B1**
(45) Date of publication and mention of the grant of the patent: **19.02.2020**
(21) Application number: 18163939.4
(22) Date of filing: 26.03.2018
(51) Int. Cl.: H01M 2/10, H01M 10/625, H01M 10/6556, H01M 10/6568, H01M 10/6567, H01M 10/6554, H01M 10/613

(54) **BATTERY PACK FOR VEHICLE, AND VEHICLE**
BATTERIEPACK FÜR FAHRZEUG UND FAHRZEUG
BLOC-BATTERIES POUR VÉHICULE ET VÉHICULE

(30) Priority: 30.03.2017 KR 20170041044
(43) Date of publication of application: 03.10.2018
(73) Proprietor: LG Electronics Inc., Seoul 07336 (KR)
(72) Inventor: JEONG, Sunhee, 07336 Seoul (KR); LEE, Sangyun, 07336 Seoul (KR); HWANG, Junguk, 07336 Seoul (KR)
(74) Representative: Vossius & Partner Patentanwälte Rechtsanwälte mbB

(56) References cited:
- KR-A- 20140 077 272
- US-A1- 2012 244 392

## Description

### BACKGROUND OF THE INVENTION

### 1. Field of the invention

The present invention relates to a battery pack for vehicle, and a vehicle.

### 2. Description of the Related Art

A vehicle is an apparatus that moves in a direction desired by a user riding therein. A representative example of a vehicle may be an automobile.

Recently, electric or hybrid vehicles powered by electrical energy have attracting a growing attentions. A vehicle using electrical energy needs to include a battery pack.

To obtain high power output, the battery pack includes a battery module that is a set of connected cell assemblies which is a plurality of unit battery cells. Each unit battery cell includes positive and negative electrode collectors, a separator, active materials, and electrolyte, so that repeated charging and discharging can be done by electrochemical reaction between the components.

The battery pack may further include a Battery Management system (BMS), which monitors and controls the state of a secondary cell by applying algorithms for controlling power in response to dynamic load, such as in a motor, for measuring an electrical feature value, such as current or voltage, for controlling equalization of voltage, and for estimating a State of Charge (SOC).

A battery pack including at least one battery module is manufactured such that a plurality of secondary cells (battery cells) are densely packed in a small space. Thus, the battery pack needs to easily dissipate heat generated by each secondary cell. In order to cool down heat generated by the battery module, the battery pack includes a thermal management system which has an air cooling or liquid cooling coolant passage and which is embedded in a battery module.

However, in the case of a battery pack having a liquid cooling thermal management system, a breakage of the passage may result in leakage of coolant, leading a short to occur.
US 2012/244392 A1 relates to systems and method for providing thermal control for battery packs using a battery pack support.
KR 2014/0077272 A relates to a heat sink for preventing a battery formed at an electric vehicle from being overheated.

### SUMMARY OF THE INVENTION

The present invention, as defined in claim 1, has been made in view of the above problems, and it is one object of the present invention to provide a battery pack for vehicle, which spatially separates a thermal management system from a battery module so as to prevent a short that possibly occurs due to leakage of coolant.

It is another object of the present invention to provide a vehicle including the aforementioned battery pack. The aforementioned objects are achieved by the independent claim. Dependent claims refer to preferred embodiments.

Objects of the present invention should not be limited to the aforementioned objects and other unmentioned objects will be clearly understood by those skilled in the art from the following description.

In accordance with an embodiment of the present invention, there is provided a battery pack for vehicle, including: at least one battery module; and a liquid cooling thermal management system disposed below the battery module, wherein the thermal management system includes: an upper plate supporting the at least one battery module, and a lower plate bonded to the upper plate to thereby form a passage in which coolant circulates.

The details of other embodiments are included in the following description and the accompanying drawings.

The embodiments of the present invention have one or more effects as follows.

First, a battery module and a thermal management system are spatially separate from each other, and therefore, it is possible to prevent dielectric breakdown that is possibly caused by leakage of coolant.

Second, the present invention is in a structure which does not allow coolant to flow into a battery module upon an external impact, thereby preventing a secondary damage by a short of an electronic component.

Third, as an integrated housing is provided for the thermal management system and the battery module, it is possible to remove the need of one component, and therefore, reduce manufacturing costs.

The present invention also relates to a battery pack for a vehicle, comprising at least one battery module; and a thermal management system disposed below the at least one battery module, wherein the thermal management system comprises an upper plate which is formed of a steel material having a corrosion preventive layer on a surface thereof, and which is configured to support the at least one battery module, and a lower plate which is formed of a steel material having a corrosion protection layer on a surface thereof, and which is bonded to the upper plate to form a passage in which coolant circulates.

The lower plate comprises a passage portion having a passage shape; and a bonding portion which is bonded to the upper plate and comprises a blocking portion that protrudes toward the upper plate so as to block leakage of an adhesive.

Preferably, the upper plate comprises a protruding portion which is formed in an area corresponding to the bonding portion, and which protrudes toward the bonding portion to block leakage of an adhesive.

Preferably, at a least part of the bonding portion is configured to support the at least one battery module.

Preferably, the bonding portion comprises an opening portion for allowing an adhesive to flow through; and a seal cap disposed below the opening portion to form a space for accommodating leaked adhesive.

Preferably, the passage portion comprises a bottom surface, the bottom surface of the passage portion preferably being formed to have a predetermined gradient in a first direction with respect to the upper plate.

Preferably, the passage portion comprises a coolant discharge hole which is formed at the bottom surface, the opening and closing of the coolant discharge hole preferably being controlled by an electrical signal.

Preferably, the passage portion comprises a first notch portion formed on a surface facing the upper plate.

Preferably, the passage portion comprises a second notch portion formed on a surface opposing the upper plate.

Preferably, wherein the lower plate is thinner than the upper plate.

Preferably, the battery pack further comprises a reinforcement structure which is formed outside the at least one battery module. Preferably, the reinforcement structure has one or more closed spaces therein.

Preferably, the reinforcement structure is secured to a vehicle body and the thermal management system.

Preferably, the battery pack further comprises an extension plate in contact with at least part of the lower plate.

Preferably, the lower plate is bolted to the reinforcement structure and the extension plate.

Preferably, the lower plate is longer than the upper plate in a direction outward from the at least one battery module.

Preferably, the battery pack further comprises an outer plate which is disposed below the thermal management system, bolted to the upper plate, and coupled to a vehicle body via a reinforcement beam to thereby support the at least one battery module and the thermal management system.

Preferably, the upper plate is coupled to a lateral housing of the at least one battery module to thereby function as a housing of the at least one battery module.

Effects of the present invention should not be limited to the aforementioned effects and other unmentioned effects will be clearly understood by those skilled in the art from the claims.

### BRIEF DESCRIPTION OF THE DRAWINGS

The embodiments will be described in detail with reference to the following drawings in which like reference numerals refer to like elements wherein:
FIG. 1 is an exploded perspective view of a battery pack for vehicle according to an embodiment of the present invention;
FIG. 2 is a perspective view of a battery pack, from which a battery module is removed, according to an embodiment of the present invention;
FIG. 3 is a cross-sectional view, taken along line A-A shown in FIG. 2, according to an embodiment of the present invention;
FIG. 4 is a partial cross-sectional view of a battery pack according to an embodiment of the present invention;
FIG. 5 is a diagram for explanation of a configuration of a thermal management system according to an embodiment of the present invention, the diagram which is an enlarged view of a portion B shown in FIG. 3;
FIG. 6 is a diagram for explanation of bonding between an upper late and a lower plate according to an embodiment of the present invention;
FIG. 7 is a diagram for explanation of an opening portion and a seal cap according to an embodiment of the present invention;
FIGS. 8 and 9 are diagrams for explanation of a blocking portion and a protrusion according to an embodiment of the present invention;
FIG. 10 is a diagram for explanation of a passage portion according to an embodiment of the present invention;
FIGS. 11 to 13 are diagrams for explanation of a notch portion according to an embodiment of the present invention;
FIG. 14 is an enlarged view of a portion C shown in FIG. 3;
FIG. 15 is an enlarged view of a portion E shown in FIG. 14;
FIG. 16 is an enlarged view of a portion D shown in FIG. 14;
FIG. 17 is an enlarged view of a portion F shown in FIG. 3; and
FIGS. 18 and 19 are diagrams for explanation of an outer plate according to an embodiment of the present invention.

### DETAILED DESCRIPTION OF THE EMBODIMENTS

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other. In addition, in the following description of the embodiments disclosed in the present specification, a detailed description of known functions and configurations incorporated herein will be omitted when it may make the subject matter of the embodiments disclosed in the present specification rather unclear. In addition, the accompanying drawings are provided only for a better understanding of the embodiments disclosed in the present specification and are not intended to limit the technical ideas disclosed in the present specification. Therefore, it should be understood that the accompanying drawings include all modifications, equivalents and substitutions included in the scope and sprit of the present invention.

It will be understood that although the terms "first," "second," etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless the context clearly indicates otherwise.

In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In the following description, a "forward direction" may be defined as a forward direction of travel of a vehicle. A "backward direction" may be defined as a backward direction of travel of a vehicle.

The term "left side" may be defined as the left side in the forward direction of travel of a vehicle. The term "right side" may be defined as the right side in the forward direction of travel of a vehicle.

The term "top" may be defined as an opposite direction of gravity. The term "above" may be defined as a direction toward the top. The term "bottom" may be defined as a direction of gravity. The term "below" may be defined as a direction toward the bottom.

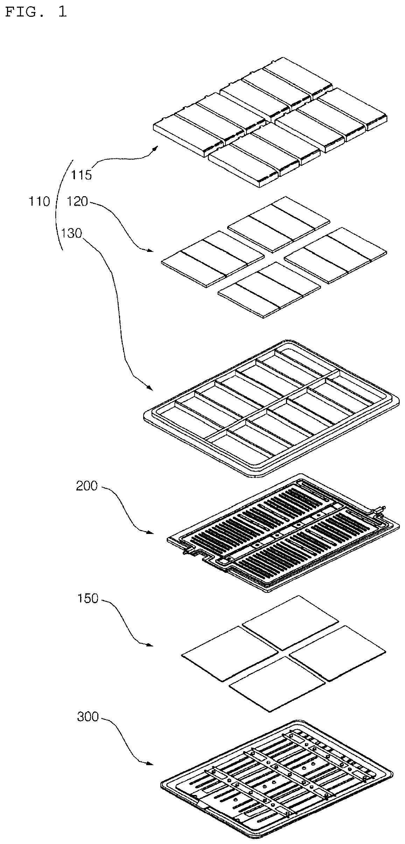

FIG. 1 is an exploded perspective view of a battery pack for vehicle according to an embodiment of the present invention.

A vehicle according to an embodiment of the present invention may include a battery pack 100 for vehicle.

Referring to FIG. 1, the battery pack 100 may include at least one battery module 110, a thermal management system 200, and an outer plate 300.

The battery module 110 may include a battery cell stack 115, and a cartridge 130.

The battery cell stack 115 may include a plurality of battery cells. Each unit battery cell may constitute a secondary cell.

The battery cell stack 115 may include a plurality of battery cell assemblies which is a plurality of multiple battery cells stacked in a horizontal or vertical direction.

Each battery cell may include positive and negative electrode current collectors, a separator, active materials, and electrolyte, so that repeated charging and discharging can be done by electrochemical reaction between the components.

The cartridge 130 is a means for stacking a plurality of battery cells. By holding the plurality of battery cells, the cartridge 130 may prevent movement of the plurality of battery cells. In addition, the cartridge 130 is configured to allow the plurality of battery cells to be stacked, and thus, the cartridge 130 may guide assembling of the plurality of battery cells.

The cartridge 130 may include a plurality of rectangle rings each having a blank area on the center thereof.

As illustrated in FIG. 1, the cartridge 130 may be disposed below the battery cell stack 115.

Meanwhile, in some embodiments, the cartridge 130 may be an element included in the battery cell stack 115.

The battery module 110 may further include a thermal pad 120 disposed between the battery cell stack 115 and the cartridge 130.

The thermal pad 120 is used as a medium for transferring heat, generated by the battery cell stack 115, to the outside. The thermal pad 120 is formed of a material having high thermal conductivity.

The thermal pad 120 may be disposed between the battery cell stack 115 and the thermal management system 200. In this case, the thermal pad 120 may transfer heat, generated by the batty cell stack 115, to the thermal management system 200.

The thermal management system 200 may cool down heat generated by the battery module 110.

The thermal management system 200 is disposed below the battery module 110 to support the battery module 110. The thermal management system 200 is disposed below the battery module 110 and may be in contact with the battery module 110.

The thermal management system 200 will be described in detail with references to FIGS. 1 to 13.

The outer plate 300 may be disposed below the thermal management system 200. The outer plate 300 may cover the battery back pack 100 attached to a vehicle.

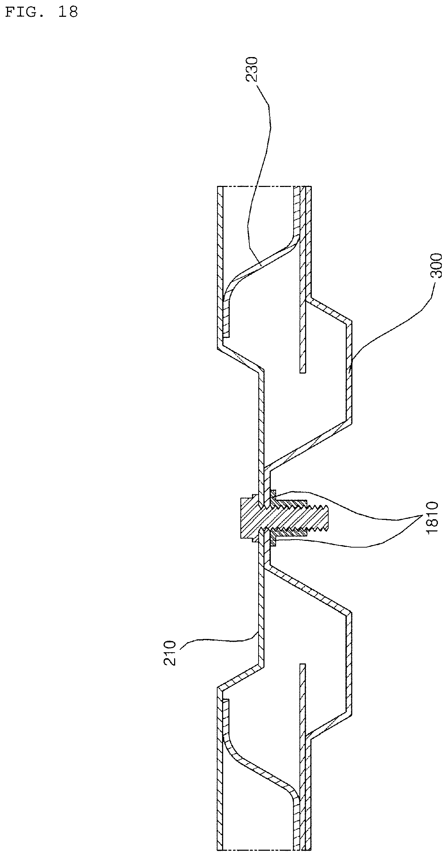

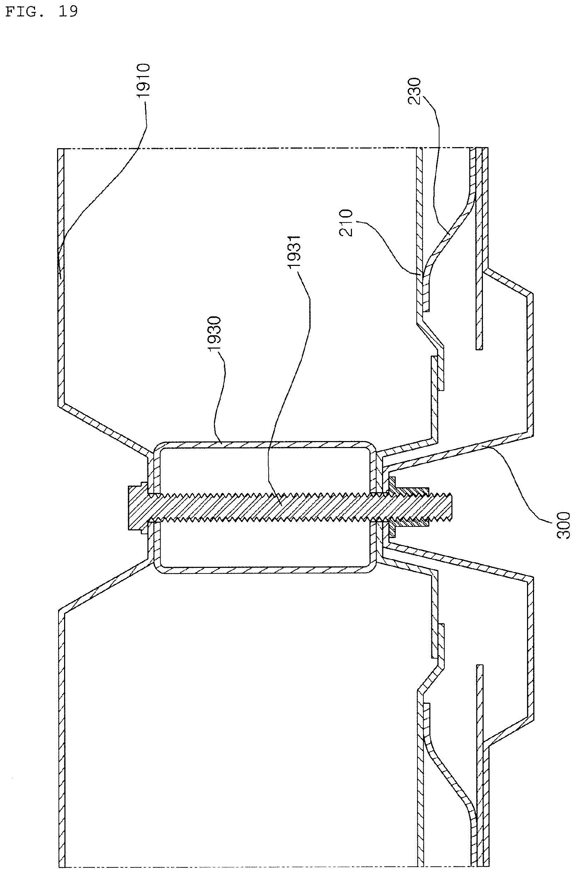

The outer plate 300 will be described in more detail with references to FIGS. 18 and 19.

Meanwhile, in some embodiments, the battery back 100 may further include an insulation pad 150.

The insulation pad 150 may be disposed between the thermal management system 200 and the outer plate 300. The insulation pad 150 may block heat transferred from the outside to the inside of the battery pack 100.

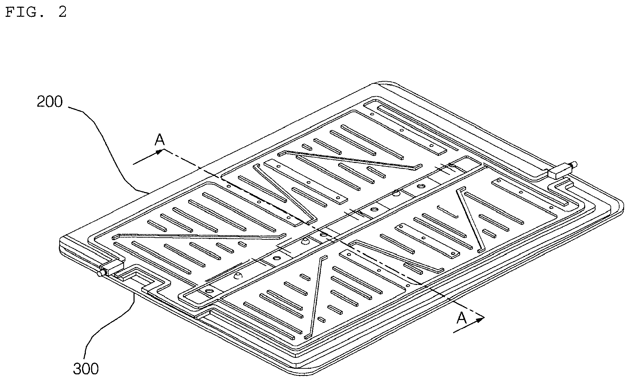

FIG. 2 is a perspective view of a battery pack, from which a battery module is removed, according to an embodiment of the present invention.

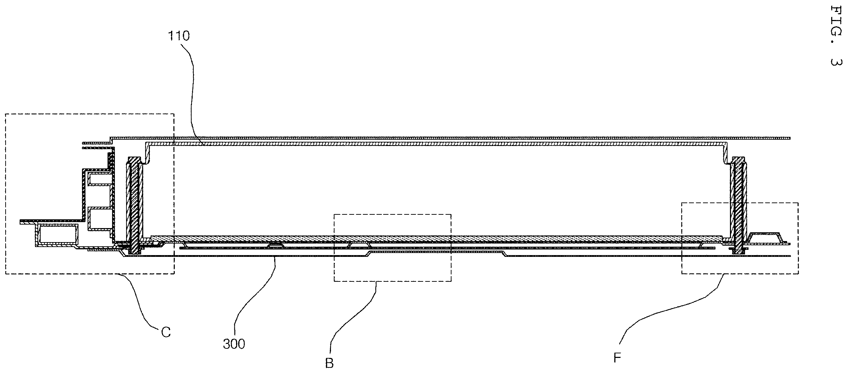

FIG. 3 is a cross-sectional view, taken along line A-A shown in FIG. 2, according to an embodiment of the present invention.

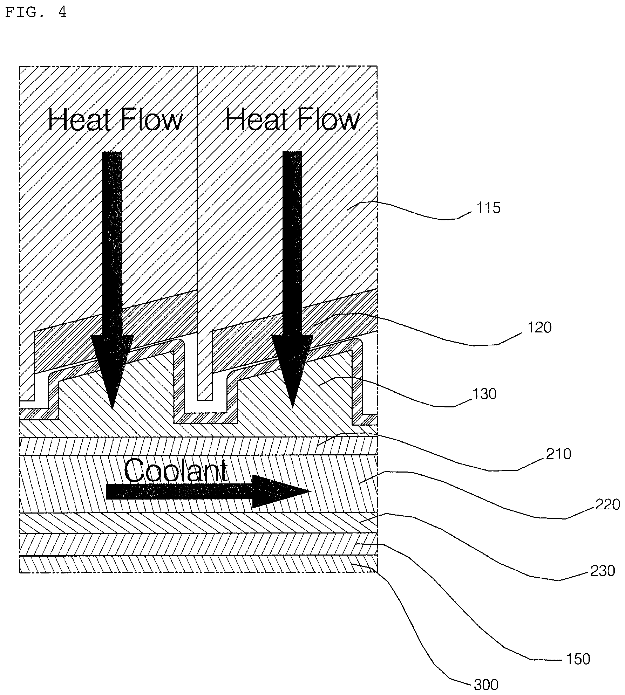

FIG. 4 is a partial cross-sectional view of a battery pack according to an embodiment of the present invention.

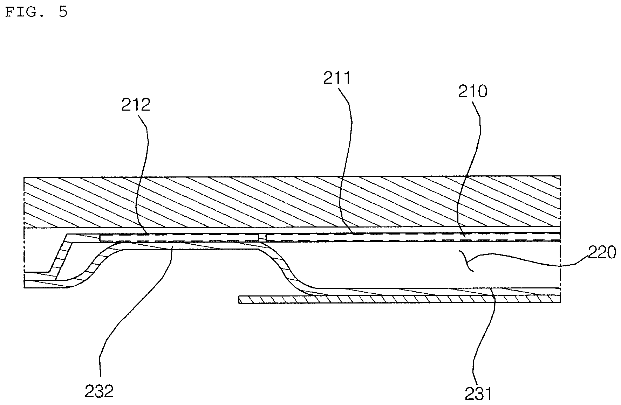

FIG. 5 is a diagram for explanation of a configuration of a thermal management system according to an embodiment of the present invention. FIG. 5 is an enlarged view of a portion B shown in FIG. 3.

Referring to the drawings, the thermal management system 200 may include an upper plate 210 and a lower plate 230.

The upper plate 210 may be disposed below the battery module 110.

The upper plate 210 may is in the form of a plate. The upper plate 210 may be laid with large surfaces facing up and down.

When viewed from top to bottom, the upper plate 210 may have a rectangular shape.

For convenience in heat exchange with the battery module 110, the upper plate 210 may be formed of a material having excellent thermal conductivity.

The upper plate 210 is formed of a steel material.

For example, the upper plate 210 is formed of a steel material having a corrosion protection layer. The corrosion protection layer may include a paint layer that is formed by painting a specific color. Alternatively, the corrosion protection layer may include a coating layer that is formed by coating a specific material for the purpose of protection from a foreign substance.

The upper plate 210 may support the battery module 110. To this end, the upper plate 210 may be formed of a high-rigid material. For example, the upper plate 210 may be formed of a steel material.

The upper plate 210 may be disposed in contact with the battery module 110. For example, the upper plate 210 may be disposed in contact with the batty cell stack 115 of the battery module 110. For example, the upper plate 210 may be disposed in contact with the thermal pad 120 of the battery module 110. For example, the upper plate 210 may be disposed in contact with the cartridge 130 of the battery module 110.

The upper plate 210 may function as a lower housing of the battery module 110. For example, the upper plate 210 may be coupled to a lateral housing of the battery module 110 and thus function as a housing of the battery module 110.

The upper plate 210 may be coupled to the lower plate 230 and therefore form a coolant passage 220 through which coolant circulates.

The upper plate 210 may be bonded to the lower plate 230.

The upper plate 210 may be divided into a non-bonding region 211 and a bonding region 212.

The non-bonding region 211 may be a region facing a passage portion 231 of the lower plate 230.

The non-bonding region 211 may have a shape corresponding to the passage portion 231. For example, the non-bonding region 211 may have a groove in a portion facing the passage portion 231, the groove which is in a shape corresponding to the passage part 231.

The bonding region 212 may be a region facing a bonding portion 232 of the lower plate 230.

The bonding region 212 may be a region to be coupled to the bonding portion 232 by means of an adhesive 225.

As the bonding region 212 of the upper plate 210 and the bonding portion 232 of the lower plate 230 are coupled to each other, the non-bonding region 211 of the upper plate 210 and the passage portion 231 of the lower plate 230 may form a specific space that extends in a horizontal direction. The space is defined as the coolant passage 220.

The upper plate 210 may include a protruding portion.

The protruding portion may be formed in the bonding region 212. The protruding portion may protrude from the bonding region 212 toward the bonding portion 232 to double-prevent leakage of the adhesive 225.

The upper plate 210 may be thicker than the lower plate 230.

The upper plate 210 may be coated with a rustproofing material. For example, the bonding region 211 of the upper plate 210 may be coated with a rustproofing material.

To prevent oxidation, the upper plate 210 may be coated with a specific paint material.

The lower plate 230 may be coupled to the upper plate 210 to form the coolant passage 220 in which coolant circulates. Specifically, the lower plate 230 is bonded to the upper plate 210 to form a passage in which coolant circulates.

The lower plate 230 may be in the form of a plate. The lower plate 230 may be laid with large surfaces facing up and down.

When viewed from top to bottom, the lower plate 230 may have a rectangular shape.

The lower plate 230 is formed of a steel material.

For example, the lower plate 230 is formed of a steel material having a corrosion protection layer. The corrosion protection layer may include a paint layer that is formed by painting a specific color. Alternatively, for the protection from a foreign substance, the corrosion protection layer may include a coating layer that is formed by coating a specific material.

Since the lower plate 230 is coupled to the upper plate 210, corrosion may occur between the lower plate 230 and the upper plate 210 in the case where the lower plate 230 is formed of a material different from that of the upper plate 210.

As the lower plate 230 is formed of the same material as that of the upper plate 210, corrosion may be prevented.

If the lower plate 230 and the upper plate 210 are welded to each other, the corrosion protection layer may be damaged and therefore corrosion may occur.

If the lower plate 230 and the upper plate 210 are bonded to each other, corrosion may be prevented.

The lower plate 230 and the upper plate 210 may have a different thermal conductivity. Specifically, the lower plate 230 may have a thermal conductivity lower than that of the upper plate 210.

As the lower plate 230 has a thermal conductivity lower than that of the upper plate 210, it is possible to block heat which can possibly flow into the battery pack 100 from the outside. As a result, it is possible to prevent external heat from increasing temperature of the coolant.

The lower plate 230 may be thinner than the upper plate 210.

As the lower plate 230 is thinner than the upper plate 210, the lower plate 230 may be first damaged by an impact and it may lead to an artificial discharge of the coolant. Due to the discharge of the coolant, it is possible to prevent damage to the battery module 110 by the coolant.

The lower plate 230 : includes the passage portion 231 and the bonding portion 232.

The passage portion 231 secures a space in which the coolant passage 220 is formed. For example, the passage portion 231 may be defined as a groove which extends inside the lower plate 230 in a horizontal direction. When the lower plate 230 is viewed from top to bottom, the passage portion 231 may have a passage shape.

In the case where the lower plate 230 and the upper plate 210 is not coupled together, the passage portion 231 may be in the shape of a groove which extends in a horizontal direction with an open top.

When the lower plate 230 and the upper plate 210 are coupled together, the top of the passage portion 231 is covered by the upper plate 210 to thereby form the coolant passage 220. For example, when the bonding region 212 of the upper plate 210 and the bonding portion 232 of the lower plate 230 are coupled together, the passage portion 231 may form the coolant passage 220 along with the non-bonding region 211 of the upper plate 210.

Meanwhile, the passage portion 231 may be thinner than the bonding portion 231. As the passage portion 231 is thinner than the bonding portion 232, the lower plate 230 may be first damaged by an impact and it may lead to an artificial discharge of coolant. Due to the discharge of the coolant, it is possible to prevent damage to the battery module 110 by the coolant.

The bonding portion 232 may be bonded to the upper plate 210.

The bonding portion 232 may be coupled to the bonding region 212 of the lower plate 230 by the adhesive 225.

At least part of the bonding portion 232 may face the lower plate 230 with the adhesive 225 therebetween.

The bonding portion 232 includes a blocking portion. The blocking portion may have a plurality of projection structures protruding toward the upper plate 210. The blocking portion accommodates an adhesive between the plurality of projection structures so as to prevent leakage of the adhesive.

At least part of the bonding portion 232 may support the battery module 110. While the bonding portion 232 is bonded to the upper plate 310, at least part of the bonding portion 232 may support the battery module 110.

The lower plate 230 may be coated with a rustproofing material. For example, the passage portion 231 of the lower plate 230 may be coated with a rustproofing material.

For the purpose of oxidation, the lower plate 230 may be coated with a specific paint material.

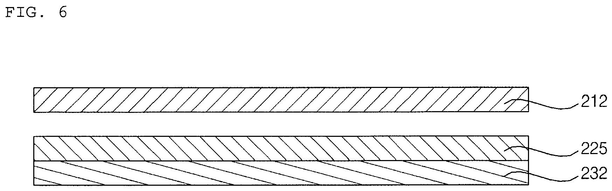

FIG. 6 is a diagram for explanation of bonding between an upper late and a lower plate according to an embodiment of the present invention.

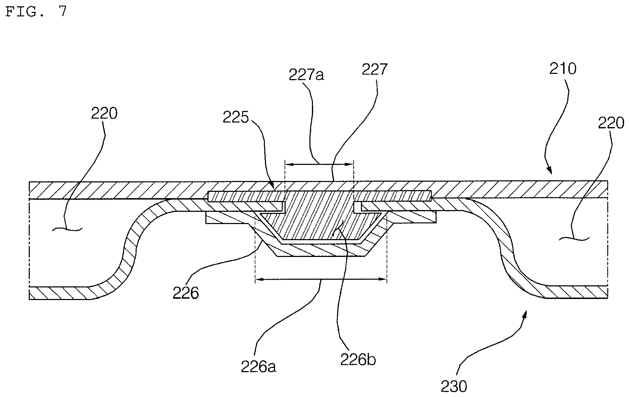

FIG. 7 is a diagram for explanation of an opening portion and a seal cap according to an embodiment of the present invention.

In the case where the upper plate 210 and the lower plate 230 are both formed of a steel material, the upper plate 210 and the lower plate 230 cannot be coupled together by brazing.

When coupled together by brazing, the coating or painting of the upper plate 210 and the lower plate 230 may be peeled off. As a result, oxidation due to the coolant may occur on the upper plate 210 and the lower plate 230.

For the purpose of such oxidation, as illustrated in FIG. 6, the upper plate 210 and the lower plate 230 may be bonded together by the adhesive 225.

For example, the bottom of the upper plate 210 and the top of the lower plate 230 may be coupled together by the adhesive 225.

For example, the bonding region 212 of the upper plate 210 and the bonding portion 232 of the lower plate 230 may be disposed to face each other. The bonding region 212 and the bonding portion 232 may be coupled together by the adhesive 225.

As the bonding region 212 and the bonding portion 232 are bonded, a space defined as the coolant passage 220 may be secured by the non-bonding region 211 and the passage portion 231.

In some embodiments, the battery pack 100 may include one or more location pins. The adhesive 225 may be applied with the relative locations of the upper plate 210 and the lower plate 230 being using the location pins.

As illustrated in FIG. 7, the bonding portion 232 may include an opening portion 227. The opening portion 227 may allow the adhesive 225 to flow downward.

The opening portion 227 may has an opening shape in the bonding portion 232. Through the opening shape, the opening portion 227 may allow the adhesive 225 to flow downward.

The bonding portion 232 may further include a seal cap 226.

The seal cap 226 may be disposed below the opening portion 227.

The seal cap 226 may form a space in which the adhesive 225 flows through the opening portion 227 is accommodated.

The seal cap 226 may have a basket shape with an open top. The seal cap 226 may be coupled to the bottom of the lower plate 230, in which the opening portion 227 is formed. As the seal cap 226 is coupled to the bottom of the lower plate 230, an adhesive accommodation space 226b with the top having an opening may be formed.

If the upper plate 210 and the lower plate 230 are coupled together with a sufficient amount of the adhesive 225 being applied to the bonding region 212 or the bonding portion 232, the adhesive 225 may be accommodated in the adhesive accommodation space 226b through the opening portion 227. Due to this structure, it is possible to ensure a more strong coupling between the upper plate 210 and the lower plate 230.

Meanwhile, an outer diameter 226a of the seal cap 226 may be greater than a diameter 227a of the opening portion 227. Due to this structure, it is possible to prevent leakage of the adhesive 225 to the outside of the seal cap 226.

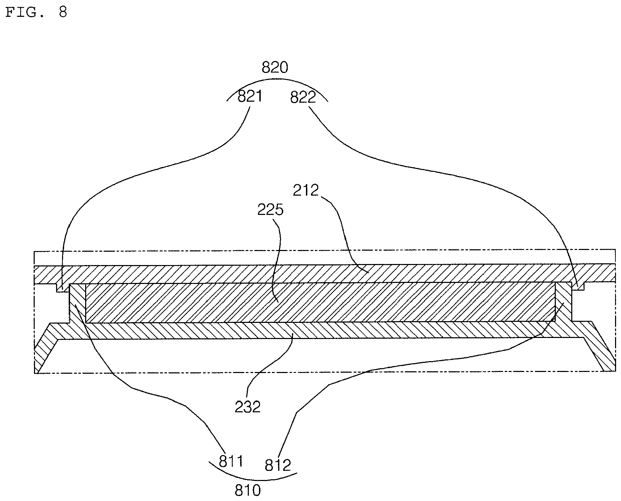

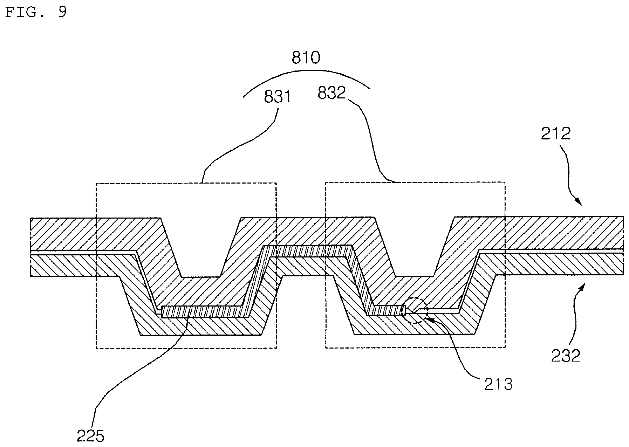

FIGS. 8 and 9 are diagrams for explanation of a blocking portion and a protrusion according to an embodiment of the present invention.

FIGS. 8 and 9 are enlarged views of the bonding region 212 and the bonding portion 232 bonded together by the adhesive 225.

Referring to FIG. 8, the bonding portion 232 includes a blocking portion 810. The blocking portion 810 protrudes toward the upper plate 210 to block leakage of an adhesive.

The blocking portion 810 may include a plurality of projections 811 and 812.

The plurality of projections 811 and 812 may extend in a horizontal direction while protruding toward the upper plate 210.

A space between the plurality of projections 811 and 812 may be filled with an adhesive 225.

For example, the blocking portion 810 may include a first projection 811 and a second projection 812.

The first projection 811 may be formed at one end of the bonding portion 232. The first projection 811 may extend in a horizontal direction while protruding toward the bonding region 212.

The second projection 812 may be formed at the other end of the bonding portion 232. The second projection 812 may extend in a horizontal direction while protruding toward the bonding region 212.

A space between the first projection 811 and the second projection 812 may be filled with the adhesive 225.

Even in the case where the upper plate 210 and the lower plate 230 are pressed together, the adhesive 225 may be blocked by the first projection 811 and the second projection 812 and therefore it cannot reach the passage portion 231.

The upper plate 210 may include a protruding portion 820. The protruding portion 820 may be formed in the bonding region 212. The protruding portion 820 may extend in a horizontal direction while protruding toward the lower plate 230.

The protruding portion 820 may be disposed close to the plurality of projections 811 and 812. For example, the protruding portion 820 may be disposed such that one side surface thereof comes into contact with the plurality of projections 811 and 812.

For example, the protruding portion 820 may include a first protruding portion 821 and a second protruding portion 822.

The first protruding portion 821 may be disposed such that one side surface thereof comes into contact with the first projection 811. The second protruding portion 822 may be disposed such that one side surface thereof comes into contact with the second projection 812.

The protruding portion 820 may double-prevent leakage of the adhesive 225 to the outside of the bonding portion 232.

Meanwhile, in some embodiments, the bonding region 212 may include a blocking portion, and the bonding portion 232 may include a protruding portion.

In this case, the blocking portion may include a plurality of protrusions that extends in the horizontal direction while protruding toward the lower plate 230. A space between the plurality of protrusions may be filled with an adhesive.

In this case, the protruding portion may extend in the horizontal direction while protruding toward the upper plate 230. The protruding portion may be disposed such that one side surface thereof comes into contact with the blocking portion.

Referring to FIG. 9, the bonding portion 232 may include a blocking portion 810. The blocking portion 810 may include a concave-convex part 831, 832 that consists of a plurality of protrusions and a plurality of grooves.

The bonding region 212 may include a concave-convex part that consists of a plurality of protrusions and a plurality of grooves.

The concave-convex part of the bonding portion 232 and the concave-convex part of the bonding region 212 may be engaged with each other. The concave-convex part of the bonding portion 232 and the concave-convex part of the bonding region 212 may be engaged with each other. Specifically, each groove in the concave-convex part of the bonding portion 232 and each protrusion in the concave-convex part of the bonding region 212 may be formed to correspond to each other. In addition, each protrusion in the concave-convex part of the bonding portion 232 and each groove in the concave-convex part of the bonding region 212 may be formed to correspond to each other.

In this case, the concave-convex part of the bonding portion 232 and the concave-convex part of the bonding region 212 are bonded together by the adhesive 225, and therefore, the upper plate 210 and the lower plate 230 may be coupled even stronger.

A protruding portion 213 may be formed in the concave-convex part of the bonding region 212. The protruding portion 213 may protrude toward the lower plate 230. When the concave-convex part of the bonding portion 232 and the concave-convex part of the bonding region 212 are engaged with each other, the protruding portion 213 may block leakage of the adhesive 225 to the passage portion 231.

A protruding portion may be formed in the concave-convex part of the bonding portion 232. The protruding portion may protrude toward the upper plate 210. The protruding portion may block leakage of the adhesive 225 to the passage portion 231, when the concave-convex part of the bonding part 232 and the concave-convex part of the bonding region are engaged with each other.

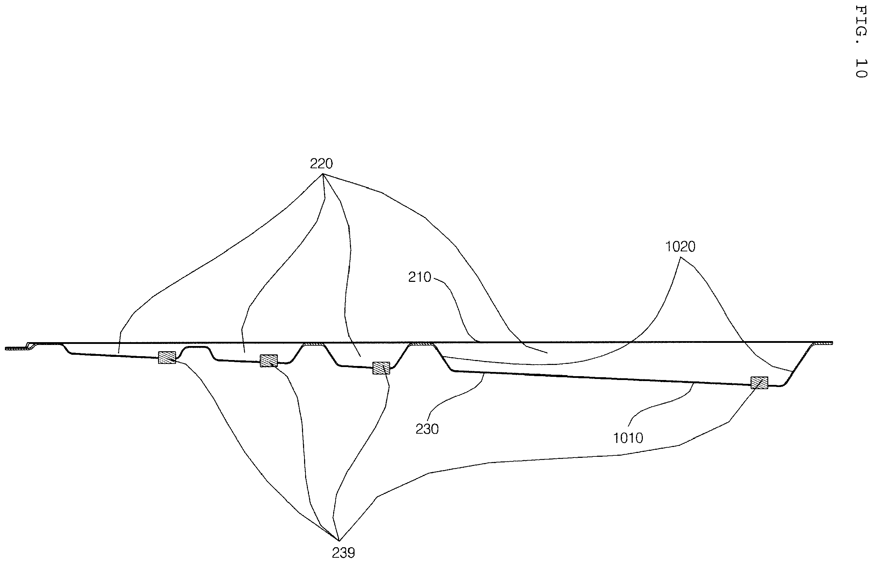

FIG. 10 is a diagram for explanation of a passage portion according to an embodiment of the present invention.

Referring to FIG. 10, the passage portion 231 may include a bottom surface 1010 and a side surface 1020.

The bottom surface 1010 may be a surface facing the upper plate 210.

The bottom surface 1010 of the passage portion 231 may be formed to have at a predetermined gradient in a first direction with respect to the upper plate 210. The first direction may be forward or backward. Alternatively, the first direction may be leftward or rightward.

The passage portion 231 may include a coolant discharge hole 239 which is formed at the bottom surface 1010 and whose opening and closing is controlled by an electrical signal.

When an impact occurs, the discharge hole 239 may be opened by an electrical signal which is provided by at least one control device included in a vehicle. In this case, the coolant may be discharged by the bottom surface 1010, formed at a gradient, through the discharge hole 239. As a result, coolant cannot flow into the battery module 110, and therefore, it is possible to prevent damage to the battery by the coolant.

The side surface 1020 may extend from the bottom surface 1010 to the bonding region 232.

Meanwhile, the coolant passage 220 may include a plurality of passages. The passage portion 231 may include a passage that defines the plurality of respective passages. Respective bottom surfaces of the plurality of passages may include the coolant discharge hole 239.

If there is a plurality of discharge holes 239, coolant can be quickly discharged by an impact.

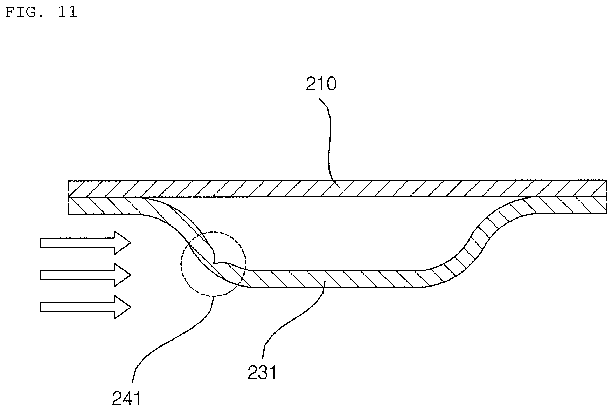

FIGS. 11 to 13 are diagrams for explanation of a notch portion according to an embodiment of the present invention.

Referring to FIG. 11, the passage portion 231 may include a first notch portion 241.

The first notch portion 241 may be formed on a surface facing the upper plate 210.

For example, the first notch portion 241 may be formed on an edge of the passage portion 231.

For example, the first notch portion 241 may be formed where the bottom surface 1010 and the side surface 1020 are distinguished.

Due to this location of the first notch portion 241, the first notch 241 may be easily broken by an impact.

Meanwhile, a surface of the lower plate 230 facing the upper plate 210 may be defined as an inner side surface.

The first notch portion 241 may be in a structure more fragile than other portions of the passage portion 231.

For example, the first notch portion 241 may has a V shape on the inner side surface. Due to the V-shape formed on the inner side surface, the first notch portion 241 may be broken by an impact, thereby possibly causing an artificial discharge of the coolant.

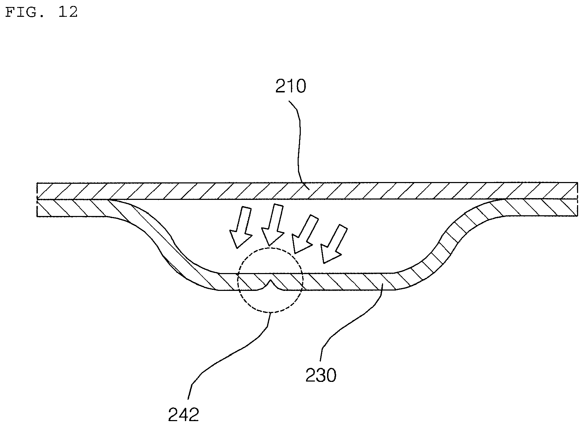

Referring to FIG. 12, the passage portion 231 may include a second notch portion 242.

The second notch portion 242 may be formed on a surface opposing the upper plate 210.

Meanwhile, a surface of the lower plate 230 opposing the upper plate 210 may be defined as an outer side surface.

For example, the second notch portion 242 may be formed at the bottom surface.

Due to this location of the second notch portion 242, the second notch portion 242 may be easily broken when internal pressure is equal to or higher than a reference level.

The second notch portion 242 may be in a fragile structure, compared to other portions of the passage portion 231.

For example, the second notch portion 242 may have a V shape on the outer side surface. Due to the V shape formed on the outer side surface, the second notch portion 242 is broken in response to internal pressure equal to or higher than a reference voltage, thereby possibly causing an artificial discharge of coolant.

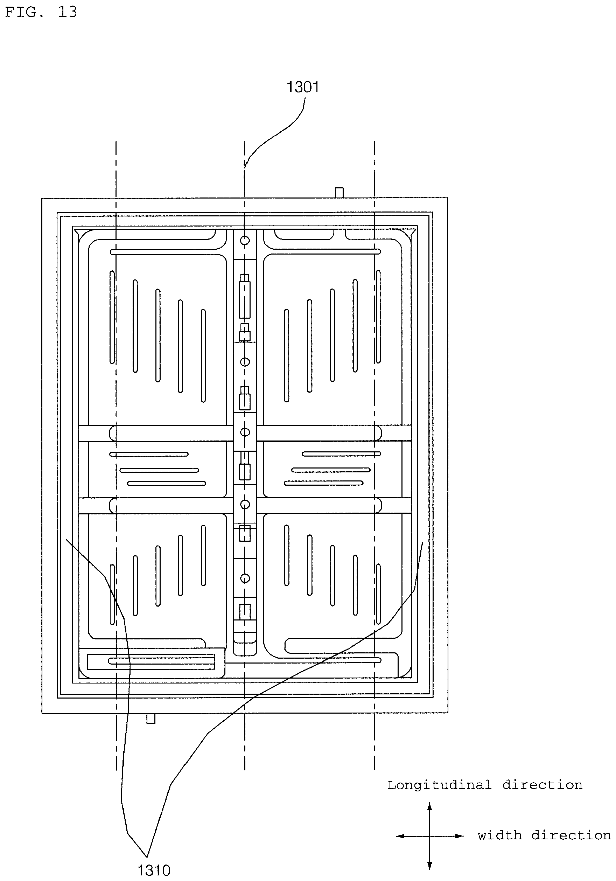

FIG. 13 shows an example of the thermal management system 200 as viewed from top to bottom.

The first notch portion 241 and the second notch portion 242 may be located in a margin area 1310 of the thermal management system 200. The margin area 1310 of the thermal management system 200 may be an area spaced apart in a width direction at a distance, which is equal to or greater than one-fifth of the entire width of the thermal management system 200, from a centerline 1301 of a longitudinal direction.

As the first notch portion 241 and the second notch portion 242 are located in the lateral margin area 1310 of the thermal management system 200, it is possible to prevent breakage of a major component of a vehicle by coolant even when the coolant is discharged.

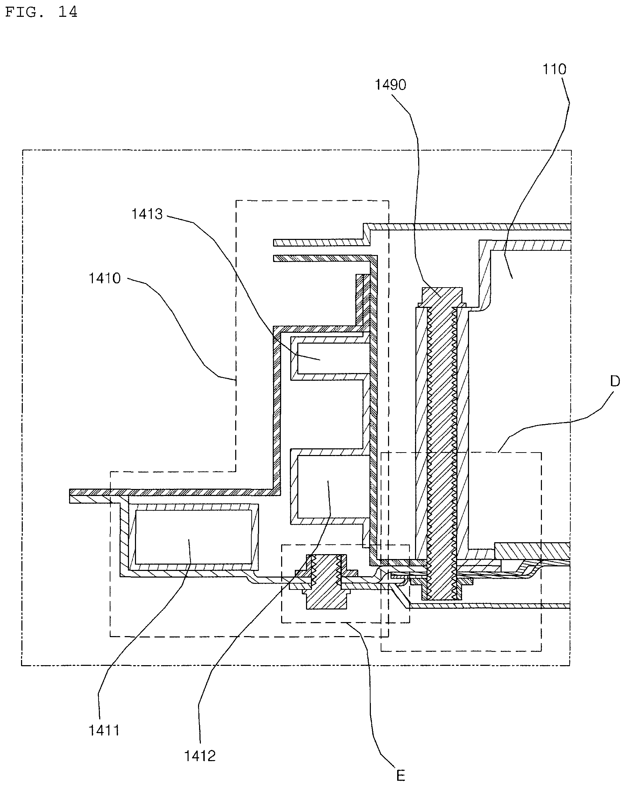

FIG. 14 is an enlarged view of a portion C shown in FIG. 3.

Referring to FIG. 14, the battery pack 100 may further include a reinforcement structure 1410.

The reinforcement structure 1410 may be formed of a steel material or an aluminum material. The reinforcement structure 1410 may be formed as a plurality of panels are coupled (e.g., welded) to one another.

The reinforcement structure 1410 may be disposed outside the battery module 110. The reinforcement structure 1410 may have one or more closed space 1411, 1412, and 1413 therein.

When a vehicle collides with an external object, the closed spaces 1411, 1412, and 1413 may absorb impact of the collision which could be otherwise transferred to the battery module 110 and the thermal management system 200.

In some embodiments, the closed spaces 1411, 1412, and 1413 may be disposed above the upper late 210. In this case, when the vehicle collides with an external object, the closed spaces 1411, 1412, and 1413 may absorb the impact so as to reduce the impact which could be otherwise transferred to the battery module 110. By reducing the impact, it is possible to prevent degradation of the battery module 110, which may be caused by the impact to the battery module 110.

In some embodiments, the closed spaces may be disposed below the upper plate 210. In this case, when the vehicle collides with an external object, the closed spaces may absorb the impact so as to reduce the impact which could be otherwise transferred to the thermal management system 200. By reducing the impact, it is possible to prevent leakage of coolant in the thermal management system 200.

Meanwhile, the reinforcement structure 1410 may be secured to at least part of a vehicle body and the thermal management system 200.

As the reinforcement structure 1410 is secured to at least part of a vehicle body frame, a stable securing can be achieved.

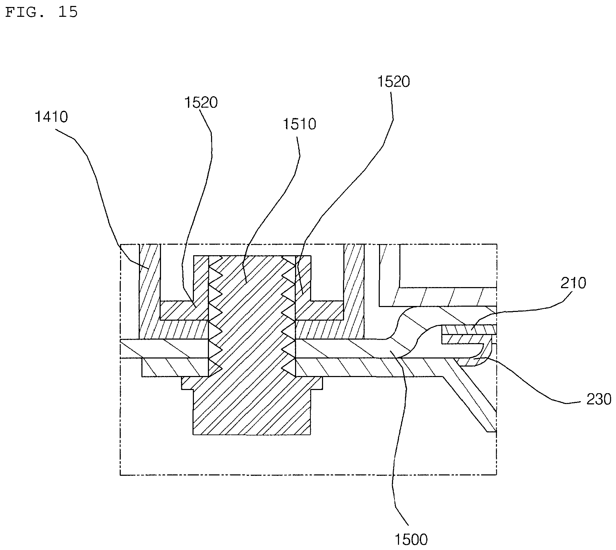

The coupling between the reinforcement structure 1410 and the thermal management system 200 will be described with reference to FIG. 15.

Meanwhile, the battery module 110 and the thermal management system 200 may be secured by a long bolt 1490.

Specifically, the battery module 110 may be secured to the upper plate 210 and the lower plate 230 by the long bolt 1490.

In some embodiments, the battery module 110 may be secured to the upper plate 210, the lower plate 230, and an extension plate 1500 (see FIG. 15) being stacked together.

FIG. 15 is an enlarged view of a portion E shown in FIG. 14.

Referring to FIG. 15, the battery pack 100 may further include the extension plate 1500.

The extension plate 1500 may be in contact with at least part of the lower plate 230.

The lower plate 230, the reinforcement structure 1410, and the extension plate 1500 may be bolted together while being stacked.

In some embodiments, the lower plate 230, the reinforcement structure 1410, the extension plate 1500, and the outer plate 300 may be bolted together while being stacked.

As illustrated in FIG. 15, the lower plate 230 is disposed on the outer plate 300, the extension plate 1500 is disposed on the lower plate 230, and the reinforcement structure 1410 is disposed on the extension plate 1500. In this case, the lower plate 230, the reinforcement structure 1410, the extension plate 1500, and the outer plate 300 may be secured together by one bolt 1510.

In this case, the lower plate 230 may be longer than the upper plate 210 in a direction outward from the battery module 110.

Since the lower plate 230 is longer than the upper plate 210, only the lower plate 230, except the upper plate 210, is secured to the outer plate 300, the extension plate 1500, and the reinforcement structure 1400.

If a vehicle collides with an external object, only the lower plate 230 may be pushed back by impact of the collision due to the above-described structure, and therefore, coolant may be discharged to the outside. As a result, the coolant is unlikely to flow into the battery module 110.

The battery pack 100 may further include at least one fastening bracket 1520.

When the lower plate 230, the reinforcement structure 1410, the extension plate 1500, and the outer plate 200 are bolted to each other, the fastening bracket 1520 may support the bolt 1510 to achieve a more stronger securing.

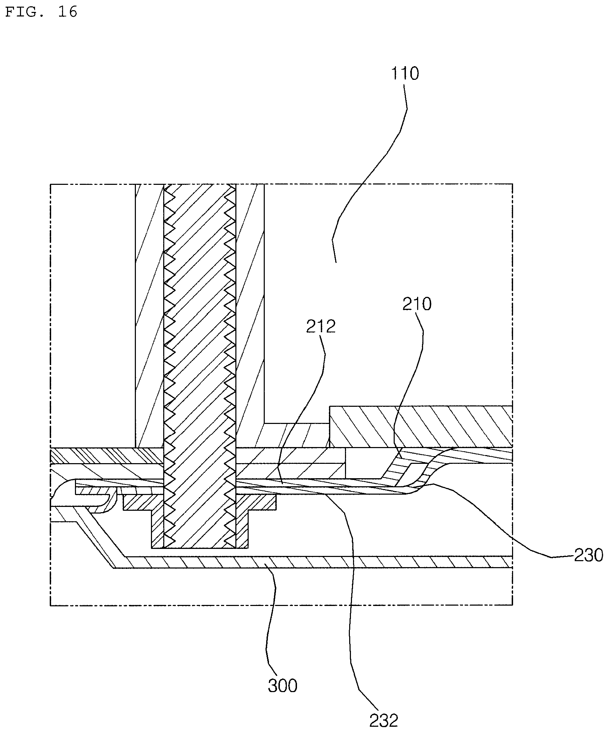

FIG. 16 is an enlarged view of a portion D shown in FIG. 14.

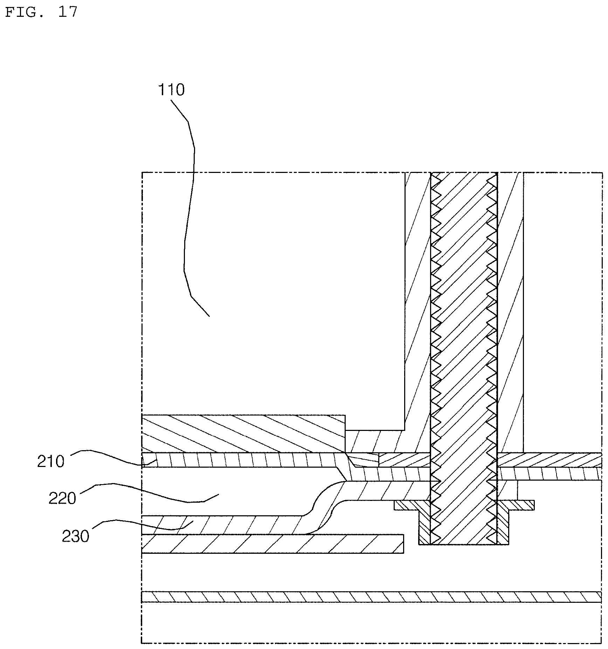

FIG. 17 is an enlarged view of a portion F shown in FIG. 3.

Referring to FIGS. 16 and 17, an end part of the battery module 110 may be located in a portion where the upper plate 210 and the lower plate 230 are coupled.

That is, at least part of the battery module 110 may vertically overlap a portion where the bonding region 212 and the bonding portion 232 are coupled.

The portion where the bonding region 212 and the bonding portion 232 are coupled may strongly support the battery module 110.

FIGS. 18 and 19 are diagrams for explanation of an outer plate according to an embodiment of the present invention.

Referring to FIG. 18, the outer plate 300 may be disposed below a thermal management system.

The outer plate 300 may be bolted to the upper plate 210.

When the outer plate 300 is bolted to the upper plate 210, the coupling therebetween may be supported by at least one fastening bracket 1810.

Referring to FIG. 19, the outer plate 300 may be coupled to a vehicle body 1910 using a reinforce beam 1930.

While the vehicle body 1910 and the thermal management system 200 are disposed with having the reinforce beam 1930 therebetween, the vehicle body 1910, the reinforce beam 1930, the thermal management system 200 may be coupled via a long bolt 1931 that penetrates the reinforce beam 1930.

If they are coupled via the reinforce beam 1930, the outer plate 300 may support the battery module 110 and the thermal management system 200.
Thus, the above detailed description should not be construed as being limited to the embodiments set forth herein in all terms, but should be considered by way of example. The scope of the present invention should be determined by the reasonable interpretation of the accompanying claims and all changes in the equivalent range of the present invention are intended to be included in the scope of the present invention.

## Claims

1. A battery pack for a vehicle, comprising:
at least one battery module (110); and
a thermal management system (200) disposed below the at least one battery module (110),
wherein the thermal management system (200) comprises:
an upper plate (210) which is formed of a steel material having a corrosion preventive layer on a surface
thereof, and which is configured to support the at least one battery module (110), and
a lower plate (230) which is formed of a steel material having a corrosion protection layer on a surface
thereof, and which is bonded to the upper plate (210) to form a passage (220) in which coolant circulates,
wherein the lower plate (230) comprises:
a passage portion (231) having a passage shape; and
a bonding portion (232) which is bonded to the upper plate (210) and **characterized in that** it comprises a blocking portion (810) that protrudes toward the upper plate.

2. The battery pack according to claim 1, wherein the upper plate (210) comprises a protruding portion (820) which is formed in an area corresponding to the bonding portion (232), and which protrudes toward the bonding portion (232).

3. The battery pack according to claim 1 or 2, wherein at a least part of the bonding portion (232) is configured to support the at least one battery module (110).

4. The battery pack according to any one of claims 1 to 3, wherein the bonding portion (232) comprises:
an opening portion (227) for allowing an adhesive to flow through; and
a seal cap (226) disposed below the opening portion to form a space for accommodating leaked adhesive.

5. The battery pack according to any one of claims 1 to 4, wherein the passage portion (231) comprises a bottom surface (1010), the bottom surface (1010) of the passage portion (231) preferably being formed to have a gradient in a first direction with respect to the upper plate (210).

6. The battery pack according to claim 5, wherein the passage portion (231) comprises a coolant discharge hole (239) which is formed at the bottom surface (1010), the opening and closing of the coolant discharge hole (239) preferably being controlled by an electrical signal.

7. The battery pack according any one of claims 1 to 6, wherein the passage portion (231) comprises a first notch portion (241) formed on a surface facing the upper plate (210).

8. The battery pack according to any one of claims 5 to 7, wherein the passage portion (231) comprises a second notch portion (242) formed on a surface opposing the upper plate.

9. The battery pack according to any one of claims 1 to 8, wherein the lower plate (230) is thinner than the upper plate (210).

10. The battery pack according to any one of claims 1 to 9, further comprising: a reinforcement structure (1410) which is formed outside the at least one battery module (110), wherein the reinforcement structure (1410) has one or more closed spaces (1411, 1412, 1413) therein,
and/or
wherein the reinforcement structure (1410) is secured to a vehicle body and the thermal management system (200).

11. The battery pack according to claim 10, further comprising: an extension plate (1500) in contact with at least part of the lower plate (230),
wherein the lower plate (230) is bolted to the reinforcement structure (1410) and the extension plate (1500).

12. The battery pack according to any one of claims 1 to 11, wherein the lower plate (230) is longer than the upper plate (210) in a direction outward from the at least one battery module (110).

13. The battery pack according to any one of claims 1 to 12, further comprising: an outer plate (300) which is disposed below the thermal management system (200), bolted to the upper plate (210), and coupled to a vehicle body via a reinforcement beam to thereby support the at least one battery module (110) and the thermal management system (200) .

14. The battery pack according to any one of claims 1 to 13, wherein the upper plate (210) is coupled to a lateral housing of the at least one battery module (110) to thereby function as a housing of the at least one battery module (110).

## Patentansprüche

1. Batteriepack für ein Fahrzeug, mit:
mindestens einem Batteriemodul (110); und
einem Wärmemanagementsystem (200), das unter dem mindestens einen Batteriemodul (110) angeordnet ist,
wobei das Wärmemanagementsystem (200) aufweist:
eine obere Platte (210), die aus einem Stahlmaterial ausgebildet ist, das auf einer Oberfläche davon eine Korrosionsschutzschicht aufweist, und die konfiguriert ist, das mindestens eine Batteriemodul (110) zu halten, und
eine untere Platte (230), die aus einem Stahlmaterial ausgebildet ist, das auf einer Oberfläche davon eine Korrosionsschutzschicht aufweist, und die mit der oberen Platte (210) verbunden ist, um einen Kanal (220) zu bilden, in dem ein Kühlmittel zirkuliert,
wobei die untere Platte (230) aufweist:
einen Kanalabschnitt (231), der eine Kanalform aufweist; und
einen Verbindungsabschnitt (232), der mit der oberen Platte (210) verbunden und **dadurch gekennzeichnet ist, dass** er einen Sperrabschnitt (810) aufweist, der zur oberen Platte vorsteht.

2. Batteriepack nach Anspruch 1, wobei die obere Platte (210) einen vorstehenden Abschnitt (820) aufweist, der in einem Bereich ausgebildet ist, der dem Verbindungsabschnitt (232) entspricht, und der zum Verbindungsabschnitt (232) vorsteht.

3. Batteriepack nach Anspruch 1 oder 2, wobei mindestens ein Teil des Verbindungsabschnitts (232) konfiguriert ist, das mindestens eine Batteriemodul (110) zu halten.

4. Batteriepack nach einem der Ansprüche 1 bis 3, wobei der Verbindungsabschnitt (232) aufweist:
einen Öffnungsabschnitt (227), um den Durchfluss eines Klebemittels zu ermöglichen; und
eine Dichtungskappe (226), die unter dem Öffnungsabschnitt angeordnet ist, um einen Raum zur Aufnahme eines ausgetretenen Klebemittels zu bilden.

5. Batteriepack nach einem der Ansprüche 1 bis 4, wobei der Kanalabschnitt (231) eine Bodenfläche (1010) aufweist, wobei die Bodenfläche (1010) des Kanalabschnitts (231) vorzugsweise so ausgebildet ist, dass sie ein Gefälle in einer ersten Richtung in Bezug auf die obere Platte (210) aufweist.

6. Batteriepack nach Anspruch 5, wobei der Kanalabschnitt (231) ein Kühlmittelauslassloch (239) aufweist, das an der Bodenfläche (1010) ausgebildet ist, wobei das Öffnen und Schließen des Kühlmittelauslasslochs (239) vorzugsweise durch ein elektrisches Signal gesteuert wird.

7. Batteriepack nach einem der Ansprüche 1 bis 6, wobei der Kanalabschnitt (231) einen ersten Kerbabschnitt (241) aufweist, der an einer zur oberen Platte (210) weisenden Oberfläche ausgebildet ist.

8. Batteriepack nach einem der Ansprüche 5 bis 7, wobei der Kanalabschnitt (231) einen zweiten Kerbabschnitt (242) aufweist, der an einer der oberen Platte (210) gegenüberliegenden Oberfläche ausgebildet ist.

9. Batteriepack nach einem der Ansprüche 1 bis 8, wobei die untere Platte (230) dünner als die obere Platte (210) ist.

10. Batteriepack nach einem der Ansprüche 1 bis 9, der ferner aufweist: eine Verstärkungsstruktur (1410), die außerhalb des mindestens einen Batteriemoduls (110) ausgebildet ist, wobei die Verstärkungsstruktur (1410) einen oder mehrere geschlossene Räume (1411, 1412, 1413) darin aufweist,
und/oder
wobei die Verstärkungsstruktur (1410) an einer Fahrzeugkarosserie und dem Wärmemanagementsystem (200) befestigt ist.

11. Batteriepack nach Anspruch 10, der ferner aufweist: eine Verlängerungsplatte (1500) in Kontakt mit mindestens einem Teil der unteren Platte (230),
wobei die untere Platte (230) an die Verstärkungsstruktur (1410) und die Verlängerungsplatte (1500) geschraubt ist.

12. Batteriepack nach einem der Ansprüche 1 bis 11, wobei die untere Platte (230) in einer Richtung von dem mindestens einen Batteriemodul (110) nach außen länger als die obere Platte (210) ist.

13. Batteriepack nach einem der Ansprüche 1 bis 12, der ferner aufweist: eine äußere Platte (300), die unter dem Wärmemanagementsystem (200) angeordnet, an die obere Platte (210) geschraubt und mit einer Fahrzeugkarosserie über einen Verstärkungsbalken gekoppelt ist, um dadurch das mindestens eine Batteriemodul (110) und das Wärmemanagementsystem (200) zu halten.

14. Batteriepack nach einem der Ansprüche 1 bis 13, wobei die obere Platte (210) mit einem lateralen Gehäuse des mindestens einen Batteriemoduls (110) gekoppelt ist, um dadurch als ein Gehäuse des mindestens einen Batteriemoduls (110) zu dienen.

## Revendications

1. Bloc-batterie pour un véhicule, comprenant :
au moins un module de batterie (110) ; et
un système de gestion thermique (200) disposé en dessous dudit au moins un module de batterie (110),
où le système de gestion thermique (200) comprend : une plaque supérieure (210) formée d'un acier dont une surface est pourvue d'une couche anti-corrosion, et prévue pour supporter ledit au moins un module de batterie (110), et
une plaque inférieure (230) formée d'un acier dont une surface est pourvue d'une couche anti-corrosion, et liée à la plaque supérieure (210) pour former un passage (220) où circule un réfrigérant, ladite plaque inférieure (230) comprenant :
une partie de passage (231) ayant la forme d'un passage ; et
une partie de liaison (232) liée à la plaque supérieure (210), et **caractérisée en ce qu'**elle comprend une partie de blocage (810) faisant saillie vers la plaque supérieure.

2. Bloc-batterie selon la revendication 1, où la plaque supérieure (210) comprend une partie saillante (820) formée dans une zone correspondant à la partie de liaison (232), et faisant saillie vers la partie de liaison (232).

3. Bloc-batterie selon la revendication 1 ou la revendication 2, où au moins une section de la partie de liaison (232) est prévue pour supporter ledit au moins un module de batterie (110).

4. Bloc-batterie selon l'une des revendications 1 à 3, où la partie de liaison (232) comprend :
une partie d'ouverture (227) permettant l'écoulement d'un adhésif ; et
un bouchon d'étanchéité (226) disposé en dessous de la partie d'ouverture pour former un espace de réception de fuite d'adhésif.

5. Bloc-batterie selon l'une des revendications 1 à 4, où la partie de passage (231) comprend une surface inférieure (1010), ladite surface inférieure (1010) de la partie de passage (231) étant formée préférentiellement de manière à présenter un gradient dans une première direction par rapport à la plaque supérieure (210).

6. Bloc-batterie selon la revendication 5, où la partie de passage (231) comprend un trou d'évacuation de réfrigérant (239) formé sur la surface inférieure (1010), l'ouverture et l'obturation dudit trou d'évacuation de réfrigérant (239) étant préférentiellement commandées par un signal électrique.

7. Bloc-batterie selon l'une des revendications 1 à 6, où la partie de passage (231) comprend une première partie d'encoche (241) formée sur une surface faisant face à la plaque supérieure (210).

8. Bloc-batterie selon l'une des revendications 5 à 7, où la partie de passage (231) comprend une deuxième partie d'encoche (242) formée sur une surface distante de la plaque supérieure.

9. Bloc-batterie selon l'une des revendications 1 à 8, où la plaque inférieure (230) est plus mince que la plaque supérieure (210).

10. Bloc-batterie selon l'une des revendications 1 à 9, comprenant en outre : une structure de renforcement (1410) formée en dehors dudit au moins un module de batterie (110), la structure de renforcement (1410) contenant un ou plusieurs espaces clos (1411, 1412, 1413), et/ou
la structure de renforcement (1410) étant fixée à la caisse d'un véhicule et au système de gestion thermique (200).

11. Bloc-batterie selon la revendication 10, comprenant en outre : une plaque d'extension (1500) en contact avec au moins une partie de la plaque inférieure (230),
la plaque inférieure (230) étant boulonnée à la structure de renforcement (1410) et à la plaque d'extension (1500).

12. Bloc-batterie selon l'une des revendications 1 à 11, où la plaque inférieure (230) est plus longue que la plaque supérieure (210) dans la direction d'extension vers l'extérieur dudit au moins un module de batterie (110).

13. Bloc-batterie selon l'une des revendications 1 à 12, comprenant en outre : une plaque extérieure (300) disposée en dessous du système de gestion thermique (200), boulonnée à la plaque supérieure (210) et raccordée à la caisse d'un véhicule par une barre de renforcement pour supporter ledit au moins un module de batterie (110) et le système de gestion thermique (200).

14. Bloc-batterie selon l'une des revendications 1 à 13, où la plaque supérieure (210) est raccordée à un boîtier latéral dudit au moins un module de batterie (110) pour fonctionner comme boîtier dudit au moins un module de batterie (110).
